# EUROPEAN PATENT APPLICATION

(11) **EP 4 583 600 A1**
(43) Date of publication of application: **09.07.2025**
(21) Application number: 23867282.8
(22) Date of filing: 05.09.2023
(51) Int. Cl.: H04W 72/00

(54) **DATA STREAM GUIDE METHOD AND APPARATUS FOR MULTIPLE PATHS**

(30) Priority: 22.09.2022 CN 202211160756
(71) Applicant: Huawei Technologies Co., Ltd., Shenzhen, Guangdong 518129 (CN)
(72) Inventor: XU, Ling, Shenzhen, Guangdong 518129 (CN); QIANG, Li, Shenzhen, Guangdong 518129 (CN); CHANG, Junren, Shenzhen, Guangdong 518129 (CN)
(74) Representative: Maiwald GmbH
(86) International application number: PCT/CN2023/117048
(87) International publication number: WO 2024/060991

(57) **Abstract**

This application provides a multi-path data flow steering method and an apparatus, and relates to the field of communication technologies, to implement a scenario in which an extended reality (extended reality, XR) service is applied to a plurality of paths, and improve communication efficiency. The method includes: A communication device obtains a data flow, where the data flow includes a first group of protocol data unit sets and a second group of protocol data unit sets. The communication device determines a steering mode that is based on each group of protocol data unit sets, and sends the first group of protocol data unit sets on a first path. The communication device sends the second group of protocol data unit sets on a second path.

## Description

This application claims priority to Chinese Patent Application No. 202211160756.3, filed with the China National Intellectual Property Administration on September 22, 2022 and entitled "MULTI-PATH DATAFLOW STEERING METHOD AND APPARATUS", which is incorporated herein by reference in its entirety.

### TECHNICAL FIELD

This application relates to the field of communication technologies, and in particular, to a multi-path data flow steering method and an apparatus.

### BACKGROUND

An extended reality (extended reality, XR) service is a service used on a terminal, is one of key media applications of 5G, and has a transmission requirement of a high throughput and high reliability. To meet a quality of service (Quality of Service, QoS) requirement of the XR service and improve user experience of XR, the 3rd generation partnership project (the 3rd generation partnership project, 3GPP) specially sets up a working group to study features of the XR service and enhanced technologies for XR service transmission.

In a current XR-related transmission enhancement technology, only a scenario of a single path between the terminal and a core network is considered, in other words, the terminal device establishes a single-access protocol data unit (Protocol Data Unit, PDU) session. XR service data is transmitted on a QoS flow (flow) of the established single-access PDU session. In a 5th generation (5th generation) mobile communication network, namely, a 5G network, it is defined that each PDU session may include a plurality of QoS flows.

Currently, according to a standard definition of an access traffic steering, switching, and splitting (Access Traffic Steering, Switching, and Splitting, ATSSS) technology in 3GPP, the terminal device may establish a multi-access (Multiple Access, MA) PDU session, access both a 3GPP network and a non-3GPP network, and may implement steering on two paths of the 3GPP network and the non-3GPP network in a load sharing mode, an active/standby mode, a minimum delay mode, or a priority mode. Then, in the 3GPP SA1 standard, access types are extended from 3GPP and non-3GPP access types to dual 3GPP access types, for example, a 3GPP NR access type and a 3GPP LTE access type, a 3GPP NR access type and a 3GPP NR access type, and a 3GPP NR access type and a 3GPP satellite network access type. Therefore, if the terminal device establishes a multi-access PDU session, a data flow of the XR service may be transmitted on a plurality of paths.

If the data flow of the XR service is transmitted on a plurality of access paths, according to a current steering manner that is based on a protocol data unit (Protocol Data Unit, PDU) set or a quantity of bytes, a plurality of PDUs (that is, a plurality of data packets) in a same PDU set (set) may be distributed to different paths. As a result, an intermediate node, for example, a base station or a Wi-Fi access point, cannot perform QoS processing based on PDU set integrity. Alternatively, a plurality of different PDU sets having a dependency relationship are distributed to different paths. For example, a PDU set corresponding to an I frame and a PDU set corresponding to a P frame are distributed to different paths, or a PDU set corresponding to a former P frame and a PDU set corresponding to a latter P frame are distributed to different paths. As a result, the intermediate node cannot perform differentiated QoS processing based on the dependency relationship, and cannot perform data scheduling and packet discarding based on integrity and differentiation of data transmission. Consequently, the XR enhancement technology fails in the multi-path scenario.

### SUMMARY

This application provides a multi-path data flow steering method and an apparatus, to implement a scenario in which an extended reality XR service is applied to a plurality of paths, and improve communication efficiency.

To achieve the foregoing objectives, this application uses the following technical solutions.

According to a first aspect, a multi-path data flow steering method is provided. The method includes: A communication device obtains a data flow, where the data flow includes a first group of protocol data unit sets and a second group of protocol data unit sets. The communication device determines a steering mode that is based on each group of protocol data unit sets, and sends the first group of protocol data unit sets on a first path. The communication device sends the second group of protocol data unit sets on a second path.

In the foregoing technical solution, multi-path steering is performed on the data flow based on each group of protocol data unit sets, so that protocol data unit sets belonging to a same frame or a plurality of protocol data unit sets having a dependency relationship may be steered to a same path. Therefore, for access points on different paths, integrity QoS processing or differentiated QoS processing may be performed based on received protocol data unit sets. For example, the access point may determine, based on a quantity of received protocol data units PDUs, whether a PDU quantity threshold for decoding the PDU set is reached, and determine whether to perform packet discarding or retransmission. For another example, if determining that a packet loss occurs in an I frame, the access point may determine that a P frame or B frame corresponding to the I frame may also be discarded, and subsequent transmission is meaningless. Therefore, invalid transmission can be avoided, multi-path transmission efficiency can be improved, transmission resource utilization can be improved, and so on.

In this embodiment of this application, steering means that in a multi-path data transmission scenario, the communication device may steer the to-be-transmitted data flow to different paths, to implement transmission on a plurality of paths, and improve transmission efficiency. For example, transmission paths on which the communication device sends the data flow to a target device includes at least the first path and the second path. The communication device may transmit different data flows on different paths according to the steering mode or the steering method provided in this embodiment of this application.

In an implementation, the first group of protocol data unit sets is one protocol data unit set, or is a plurality of protocol data unit sets; and the second group of protocol data unit sets is one protocol data unit set, or is a plurality of protocol data unit sets.

In the foregoing possible implementation, in this embodiment of this application, for a group of protocol data unit sets, one protocol data unit set (PDU set) may be grouped into one group, or a plurality of protocol data unit sets (PDU set) may be grouped into one group, so that multi-path data flow steering can be performed based on each group of protocol data unit sets, and flexibility of multi-path transmission can be improved.

In an implementation, there is a dependency relationship between the plurality of protocol data unit sets. The plurality of protocol data unit sets (PDU set) having the dependency relationship are used as one group to perform multi-path data flow steering, so that a single access point can determine integrity and data dependency of transmitted data, and multi-path communication efficiency can be improved.

In an implementation, the steering mode that is based on each group of protocol data unit sets includes: a load sharing mode, which means that different groups of protocol data unit sets are transmitted on a plurality of paths based on preset load ratios and according to a load balancing rule. In an existing load balancing steering mode, in this embodiment of this application, based on each group of protocol data unit sets, the data flow may be transmitted on the plurality of paths based on a preset load ratio of each path, to implement integrity or differentiated processing of an XR service, and improve flexibility and communication efficiency of multi-path transmission.

In an implementation, the steering mode that is based on each group of protocol data unit sets includes: a minimum delay mode, which means that a group of protocol data unit sets is transmitted on the first path with a low delay; and when it is detected that a transmission delay of the second path is lower than the transmission delay of the first path, transmission is performed on the second path based on each group of protocol data unit sets. In an existing minimum delay steering mode, in this embodiment of this application, based on each group of protocol data unit sets, the data flow may be steered to different transmission paths based on a real-time transmission path delay status in a form of groups of protocol data unit sets, to implement integrity or differentiated processing of an XR service, and improve flexibility and communication efficiency of multi-path transmission.

In an implementation, the steering mode that is based on each group of protocol data unit sets includes: a priority mode, which means that a group of protocol data unit sets is transmitted on the first path; and when the first path is congested, transmission is performed on the second path based on each group of protocol data unit sets. In an existing priority steering mode, in this embodiment of this application, based on each group of protocol data unit sets, the first group of protocol data unit sets may be transmitted on a preset path for preferential transmission based on the path for preferential transmission, until the path is congested; and then the subsequent second group of protocol data unit sets may be transmitted on another path, to implement integrity or differentiated processing of an XR service, and improve flexibility and communication efficiency of multi-path transmission.

In an implementation, the method further includes: The communication device receives, from a network device, indication information that is based on each group of protocol data unit sets. That the communication device determines a steering mode that is based on each group of protocol data unit sets includes: The communication device determines, based on the indication information, the steering mode that is based on each group of protocol data unit sets.

In the foregoing possible implementation, the network device may send steering indication information to the communication device (for example, a terminal device or a UPF network element), to indicate the communication device to perform multi-path data flow steering based on groups of protocol data unit sets, to implement flexible configuration of a multi-path steering manner.

In an implementation, that the communication device determines, based on the indication information, the load sharing mode that is based on each group of protocol data unit sets further includes: The communication device receives first information and second information from the network device, where the first information identifies a path, and the second information identifies a load ratio of the path corresponding to the first information. The communication device determines, based on the first information and the second information, the load sharing ratio of the path determined based on the first information.

In an implementation, the communication device determines, based on the indication information, the priority mode that is based on each group of protocol data unit sets, and the method further includes: The communication device receives third information from the network device, where the third information identifies a path for preferential transmission. The communication device determines, based on the third message, that the first path is the path for preferential transmission.

In an implementation, the method further includes: The communication device determines that the data flow is transmitted by using an XR QoS flow. That the communication device determines a steering mode that is based on each group of protocol data unit sets includes: The communication device determines, based on the XR QoS flow, the steering mode that is based on each group of protocol data unit sets.

In the foregoing possible implementation, the communication device may further determine, based on the fact that the current data flow is transmitted by using an XR QoS flow, to perform data steering according to the steering mode that is based on each group of protocol data unit sets, to implement flexible configuration of an XR service-based multi-path steering manner.

In an implementation, determining that the data flow is transmitted by using an XR QoS flow includes: determining, by the communication device based on identification information of a QoS flow hit by the data flow, that the data flow is transmitted by using an XR QoS flow; or determining, based on quality of service flow description information associated with a QoS flow hit by the data flow, that the data flow is transmitted by using an XR QoS flow, where the quality of service flow description information includes at least one of a quality of service identifier, a transmission delay, or a packet loss rate; or determining, based on a context, that the data flow is transmitted by using an XR QoS flow.

In an implementation, the first path and the second path are different transmission paths corresponding to a 3GPP access type or a non-3GPP access type.

In the foregoing possible implementation, a scenario and a quantity of multi-access transmission paths are not limited in this embodiment of this application. For example, the following may be included: The first path may be a transmission path corresponding to the non-3GPP access type, and the second path may be a transmission path corresponding to the 3GPP access type; the first path may be a transmission path corresponding to the 3GPP access type, and the second path may be a transmission path corresponding to the non-3GPP access type; the first path and the second path are different transmission paths corresponding to the 3GPP access type; or the first path and the second path are different transmission paths corresponding to the non-3GPP access type.

In an implementation, the communication device is a terminal device or a user plane function UPF network element.

In an implementation, if the communication device is the terminal device, the method further includes: The terminal device sends a session establishment request message to the network device. The terminal device receives a session establishment accept message from the network device.

According to a second aspect, a multi-path data flow steering method is provided. The method includes: A network device receives a session establishment request message from a terminal device. The network device establishes a session including an XR QoS flow. The network device sends indication information to a communication device, where the indication information indicates a steering mode that is based on each group of protocol data unit sets; sends a first group of protocol data unit sets on a first path; and sends a second group of protocol data unit sets on a second path.

In an implementation, the first group of protocol data unit sets is one protocol data unit set, or is a plurality of protocol data unit sets; and the second group of protocol data unit sets is one protocol data unit set, or is a plurality of protocol data unit sets.

In an implementation, there is a dependency relationship between the plurality of protocol data unit sets.

In an implementation, the steering mode that is based on each group of protocol data unit sets includes: a load sharing mode, which means that different groups of protocol data unit sets are transmitted on a plurality of paths based on preset load ratios and according to a load balancing rule.

In an implementation, the steering mode that is based on each group of protocol data unit sets includes: a minimum delay mode, which means that a group of protocol data unit sets is transmitted on the first path with a low delay; and when it is detected that a transmission delay of the second path is lower than the transmission delay of the first path, transmission is performed on the second path based on each group of protocol data unit sets.

In an implementation, the steering mode that is based on each group of protocol data unit sets includes: a priority mode, which means that a group of protocol data unit sets is transmitted on the first path; and when the first path is congested, transmission is performed on the second path based on each group of protocol data unit sets.

In an implementation, that the indication information indicates the load sharing mode that is based on each group of protocol data unit sets further includes: The network device sends first information and second information to the communication device, where the first information identifies a path, the second information identifies a load ratio of the path corresponding to the first information, and the first information and the second information are used by the communication device to determine the load sharing ratio of the path identified by the first information.

In an implementation, that the indication information indicates the priority mode that is based on each group of protocol data unit sets further includes: The network device sends third information to the communication device, where the third information identifies a path for preferential transmission, and the third information is used by the communication device to determine that the first path is the path for preferential transmission.

In an implementation, the network device is a session management function SMF network element.

In an implementation, the communication device is the terminal device or a user plane function UPF network element.

In an implementation, if the communication device is the terminal device, the method further includes: The network device sends a session accept message to the terminal device, where the indication information is included in the session accept message.

In an implementation, if the communication device is the user plane function UPF network element, the method further includes: The network device sends a session modification message to the user plane function UPF network element, where the indication information is included in the session modification message.

In an implementation, the first path and the second path are different transmission paths corresponding to a 3GPP access type or a non-3GPP access type.

According to a third aspect, a communication apparatus is provided. The communication apparatus includes: a processing module, configured to obtain a data flow, where the data flow includes a first group of protocol data unit sets and a second group of protocol data unit sets, where the processing module is further configured to determine a steering mode that is based on each group of protocol data unit sets; and a communication module, configured to: send the first group of protocol data unit sets on a first path, and send the second group of protocol data unit sets on a second path.

In an implementation, the first group of protocol data unit sets is one protocol data unit set (PDU set), or includes a plurality of protocol data unit sets; and the second group of protocol data unit sets is one protocol data unit set, or includes a plurality of protocol data unit sets.

In an implementation, there is a dependency relationship between the plurality of protocol data unit sets.

In an implementation, the steering mode that is based on each group of protocol data unit sets includes: a load sharing mode, which means that different groups of protocol data unit sets are transmitted on a plurality of paths based on preset load ratios and according to a load balancing rule.

In an implementation, the steering mode that is based on each group of protocol data unit sets includes: a minimum delay mode, which means that a group of protocol data unit sets is transmitted on the first path with a low delay; and when it is detected that a transmission delay of the second path is lower than the transmission delay of the first path, transmission is performed on the second path based on each group of protocol data unit sets.

In an implementation, the steering mode that is based on each group of protocol data unit sets includes: a priority mode, which means that a group of protocol data unit sets is transmitted on the first path; and when the first path is congested, transmission is performed on the second path based on each group of protocol data unit sets.

In an implementation, the communication module is further configured to receive, from a network device, indication information that is based on each group of protocol data unit sets. The processing module is further configured to determine, based on the indication information, the steering mode that is based on each group of protocol data unit sets.

In an implementation, the communication module is further configured to receive first information and second information from the network device, where the first information identifies a path, and the second information identifies a load ratio of the path corresponding to the first information. The processing module is further configured to determine, based on the first information and the second information, the load sharing ratio of the path determined based on the first information.

In an implementation, the communication module is further configured to receive third information from the network device, where the third information identifies a path for preferential transmission. The processing module is further configured to determine, based on the third message, that the first path is the path for preferential transmission.

In an implementation, the processing module is further configured to: determine that the data flow is transmitted by using an XR QoS flow; and determine, based on the XR QoS flow, the steering mode that is based on each group of protocol data unit sets.

In an implementation, the processing module is further configured to: determine, based on identification information of a QoS flow hit by the data flow, that the data flow is transmitted by using an XR QoS flow; or determine, based on quality of service flow description information associated with a QoS flow hit by the data flow, that the data flow is transmitted by using an XR QoS flow, where the quality of service flow description information includes at least one of a quality of service identifier, a transmission delay, or a packet loss rate; or determine, based on a context, that the data flow is transmitted by using an XR QoS flow.

In an implementation, the first path and the second path are different transmission paths corresponding to a 3GPP access type or a non-3GPP access type.

In an implementation, the communication device is a terminal device or a user plane function UPF network element.

In an implementation, if the communication device is the terminal device, the communication module is further configured to: send a session establishment request message to the network device; and receive a session establishment accept message from the network device.

According to a fourth aspect, a network device is provided. The device includes: a communication module, configured to receive a session establishment request message from a terminal device; and a processing module, configured to establish a session including an XR QoS flow, where the communication module is further configured to: send indication information to a communication device, where the indication information indicates a steering mode that is based on each group of protocol data unit sets; send a first group of protocol data unit sets on a first path; and send a second group of protocol data unit sets on a second path.

In an implementation, the first group of protocol data unit sets is one protocol data unit set, or is a plurality of protocol data unit sets; and the second group of protocol data unit sets is one protocol data unit set, or is a plurality of protocol data unit sets.

In an implementation, there is a dependency relationship between the plurality of protocol data unit sets.

In an implementation, the steering mode that is based on each group of protocol data unit sets includes: a load sharing mode, which means that different groups of protocol data unit sets are transmitted on a plurality of paths based on preset load ratios and according to a load balancing rule.

In an implementation, the steering mode that is based on each group of protocol data unit sets includes: a minimum delay mode, which means that a group of protocol data unit sets is transmitted on the first path with a low delay; and when it is detected that a transmission delay of the second path is lower than the transmission delay of the first path, transmission is performed on the second path based on each group of protocol data unit sets.

In an implementation, the steering mode that is based on each group of protocol data unit sets includes: a priority mode, which means that a group of protocol data unit sets is transmitted on the first path; and when the first path is congested, transmission is performed on the second path based on each group of protocol data unit sets.

In an implementation, the communication module is further configured to receive first information and second information from the network device, where the first information identifies a path, and the second information identifies a load ratio of the path corresponding to the first information. The processing module is further configured to determine, based on the first information and the second information, the load sharing ratio of the path determined based on the first information.

In an implementation, the communication module is further configured to receive third information from the network device, where the third information identifies a path for preferential transmission. The processing module is further configured to determine, based on the third message, that the first path is the path for preferential transmission.

In an implementation, the network device is a session management function SMF network element.

In an implementation, the communication device is the terminal device or a user plane function UPF network element.

In an implementation, if the communication device is the terminal device, the communication module is further configured to send a session accept message to the terminal device, where the indication information is included in the session accept message.

In an implementation, if the communication device is the user plane function UPF network element, the communication module is further configured to send a session modification message to the user plane function UPF network element, where the indication information is included in the session modification message.

In an implementation, the first path and the second path are different transmission paths corresponding to a 3GPP access type or a non-3GPP access type.

According to a fifth aspect, a communication device is provided. The communication device includes a processor and a memory coupled to the processor. The memory stores computer program code. The computer program code includes computer instructions. When the processor executes the computer instructions, the terminal device is enabled to perform the method in any implementation of the first aspect.

According to a sixth aspect, a network device is provided. The network device includes a processor and a memory coupled to the processor. The memory is coupled to the processor. The memory stores computer program code. The computer program code includes computer instructions. When the processor executes the computer instructions, the network device is enabled to perform the method in any implementation of the second aspect.

According to a seventh aspect, a computer-readable storage medium is provided. The computer-readable storage medium stores computer-executable instructions. When the computer-executable instructions are invoked by a computer, the computer is enabled to perform the method in any implementation of the first aspect.

According to an eighth aspect, a computer-readable storage medium is provided. The computer-readable storage medium stores computer-executable instructions. When the computer-executable instructions are invoked by a computer, the computer is enabled to perform the method in any implementation of the second aspect.

According to a ninth aspect, a computer program product including instructions is provided. When the computer program product runs on a computer, the computer is enabled to perform the method in any implementation of the first aspect.

According to a tenth aspect, a computer program product including instructions is provided. When the computer program product runs on a computer, the computer is enabled to perform the method in any implementation of the second aspect.

According to an eleventh aspect, a chip is provided. The chip is coupled to a memory, and is configured to read and execute program instructions stored in the memory, to implement the method in any implementation of the first aspect.

According to a twelfth aspect, a chip is provided. The chip is coupled to a memory, and is configured to read and execute program instructions stored in the memory, to implement the method in any implementation of the second aspect.

According to a thirteenth aspect, a communication system is provided. The communication system includes the communication device according to the third aspect and the network device according to the fourth aspect.

It may be understood that any communication device, network device, computer-readable storage medium, computer program product, chip, or communication system provided above may be configured to perform a corresponding method provided above. Therefore, for beneficial effect that can be achieved by the communication device, network device, computer-readable storage medium, computer program product, chip, or communication system, refer to the beneficial effect of the corresponding method provided above. Details are not described herein again.

### BRIEF DESCRIPTION OF DRAWINGS

FIG. 1 is a diagram of an architecture of a multi-access communication system according to an embodiment of this application;
FIG. 2 is a diagram of GOP-based encoding and transmission of a video image according to an embodiment of this application;
FIG. 3 is a diagram of slice (slice)-based encoding and transmission of a video image according to an embodiment of this application;
FIG. 4 is a diagram of a structure of a communication apparatus according to an embodiment of this application;
FIG. 5 to FIG. 8 are schematic flowcharts of several multi-access data flow steering methods according to embodiments of this application;
FIG. 9 is a diagram of a format of an RTP packet header according to an embodiment of this application;
FIG. 10 is a diagram of a format of an extension header of an RTP packet according to an embodiment of this application;
FIG. 11 is a diagram of a format of another RTP packet according to an embodiment of this application;
FIG. 12 is a diagram of a format of an extension header of another RTP packet according to an embodiment of this application; and
FIG. 13 is a diagram of a structure of a communication apparatus according to an embodiment of this application.

### DESCRIPTION OF EMBODIMENTS

Terms "first" and "second" mentioned below are merely used for the purpose of description, and shall not be understood as indicating or implying relative importance or implicitly indicating a quantity of indicated technical features. Therefore, a feature limited by "first" or "second" may explicitly or implicitly include one or more such features. In descriptions of embodiments, unless otherwise specified, "a plurality of" means two or more than two.

It should be noted that, in this application, the term "example", "for example", or the like is used to represent giving an example, an illustration, or a description. Any embodiment or design scheme described with "example" or "for example" in this application should not be explained as being more preferred or having more advantages than another embodiment or design scheme. Exactly, use of the term "example", "for example", or the like is intended to present a relative concept in a specific manner.

The following clearly and completely describes technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts fall within the protection scope of this application.

First, an implementation environment and an application scenario of embodiments of this application are briefly described.

A communication method provided in embodiments of this application may be applied to a communication system using a multi-access manner. Multi-access may mean that a terminal device may access a core network device in more than one access manner. In this way, the terminal device may implement data transmission with a core network or an application server on more than one transmission path.

For example, the terminal device may access the core network through an access network device corresponding to a 3rd generation partnership project (3rd generation partnership project, 3GPP) access type, or may access the core network through an access network device corresponding to a non-3GPP access type, to implement multi-access communication. Alternatively, the multi-access communication may further include two or more access manners corresponding to the 3GPP access type. For example, the terminal device may implement multi-access by using both a 4G communication system and a 5G communication system, or may implement multi-access by using both two 5G communication systems. Alternatively, the multi-access communication may further include two or more access manners corresponding to the non-3GPP access type. For example, the terminal device may implement multi-access by using both a Bluetooth communication system and a Wi-Fi communication system.

In embodiments of this application, a specific access type of the multi-access manner and a quantity of access paths of the multi-access manner are not specifically limited.

The 3GPP access type may include the following access technologies: a long term evolution (Long Term Evolution, LTE) technology corresponding to a 4G cellular network, a new radio (New Radio, NR) technology corresponding to a 5G cellular network, a next-generation wireless communication technology, a satellite access manner (where satellites include a low-orbit satellite, a medium-orbit satellite, and a synchronous satellite) defined by 3GPP, and the like.

The non-3GPP access type includes untrusted non-3GPP access (untrusted non-3GPP access) (for example, access to the core network through a wireless access node purchased by a person), a trusted non-3GPP access network (trusted non-3GPP access Network, TNAN) (for example, access to the core network through a wireless access node deployed by an operator), a wireline access (wireline access) technology, and the like. Access technologies of non-3GPP access may include a wireless communication technology (Wi-Fi), Bluetooth, ZigBee (ZigBee), and the like.

A non-3GPP access network device may be specifically a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), a wireline access gateway function (wireline access gateway function, W-AGF), or the like. The W-AGF may also be referred to as an AGF. If the access technology is an untrusted non-3GPP access technology, a corresponding non-3GPP access device may include the N3IWF. If the access technology is a trusted non-3GPP access technology, a corresponding non-3GPP access device may include the TNGF.

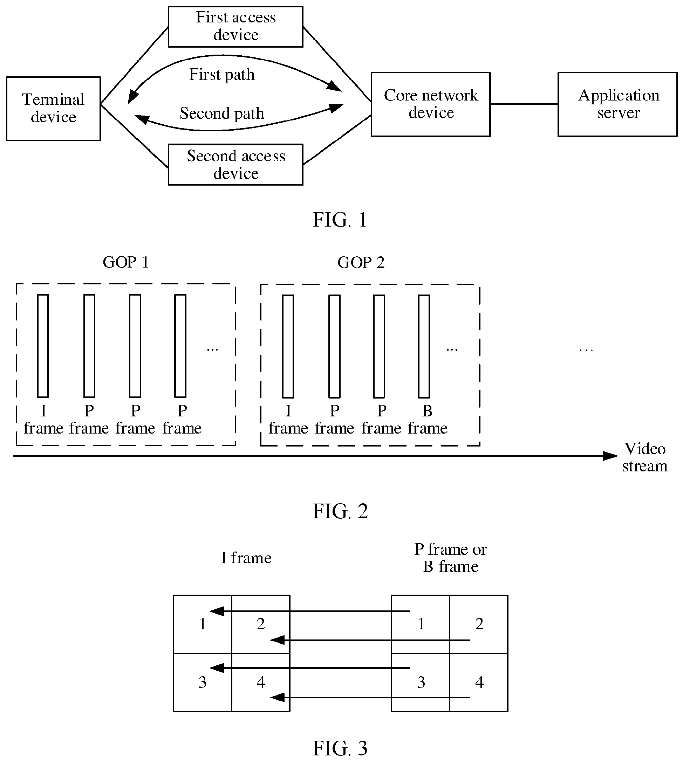

A multi-access communication system shown in FIG. 1 may include a terminal device, a first access device, a second access device, a core network device, and an application server. The first access device and the second access device may be access network devices corresponding to different access manners. For example, the access device may be an (R)AN. The core network device may be a user plane device or another network element. The application server is configured to: respond to a service request of the terminal device, and provide a service for the terminal device. Data sent by the terminal device to the application server may be referred to as uplink data, and data sent by the application server to the terminal device may be referred to as downlink data.

The terminal device may also be referred to as user equipment (user equipment, UE), a mobile station, a mobile terminal, a terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The (R)AN may be an AN or a RAN. Specifically, the RAN may be a radio access network device in various forms, for example, a base station, a macro base station, a micro base station, or a distributed unit-control unit (distributed unit-control unit, DU-CU). In addition, the base station may also be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The (R)AN is mainly responsible for radio resource management, quality of service management, data compression and encryption, and the like on an air interface side. The AN may be a non-3GPP access network, for example, a trusted non-3GPP access network (trusted non-3GPP access network, TNAN), a trusted WLAN access network (trusted WLAN access network, TWAN), an untrusted non-3GPP radio access network, a wireline access network (wireline access network, WAN), or a wireline 5G access network (wireline 5G access network, W-5GAN). An access network device corresponding to the trusted non-3GPP access network may be a trusted non-3GPP gateway function (trusted non-3GPP gateway function, TNGF). An access network device corresponding to the trusted WLAN access network may be a trusted WLAN interworking function (trusted WLAN interworking function, TWIF). An access network device corresponding to the untrusted non-3GPP access network may be a non-3GPP interworking function (non-3GPP interworking function, N3IWF). An access network device corresponding to the wireline access network or the wireline 5G access network may be a wireline access gateway function (wireline access gateway function, W-AGF).

The user plane device may be referred to as a user plane function (user plane function, UPF) or a user plane network element, and is mainly responsible for receiving and forwarding user data. The UPF may receive downlink data from a data network (data network, DN), and then transmit the downlink data to UE through an (R)AN. The UPF may further receive uplink data from the UE through the (R)AN, and then forward the uplink data to the DN.

For functions of other network elements that may be further included in FIG. 1, refer to related descriptions in a conventional technology. Details are not described herein.

Embodiments of this application mainly provide a multi-path data steering method for an XR service. The XR service is a general term of a plurality of services such as a virtual reality (virtual reality, VR) service, an augmented reality (augmented reality, AR) service, a mixed reality (Mixed Reality, MR) service, and a cloud gaming (cloud gaming, CG) service. For the XR service, video image data, audio data, haptic data, sensor data, and the like may need to be transmitted at the same time. The video image data of the XR service is used as an example. Transmitted data may include many video frames. If a similarity between adjacent video frames is high, a GOP-based encoding and transmission manner is used in video data encoding.

For example, as shown in FIG. 2, a segment of video frames may be divided into a plurality of GOPs for transmission. Each GOP includes one I frame and several P frames or B frames, and encoding of different GOPs is independent of each other.

The I frame (Intra-coded picture frame, intra-coded picture frame) is a key frame, includes complete image information, and is usually used as a 1^{st} frame of the GOP. The P frame (Predicted-coded picture frame, predicted-coded picture frame) is a difference frame, and includes a difference between the current frame and a nearest preceding I frame or P frame. The P frame may depend on the preceding I frame or P frame. The B frame (Bidirectional predicted picture frame, bidirectional predicted picture frame) is a bidirectional difference frame, and records differences between the current frame and preceding and succeeding frames (a nearest preceding I frame or P frame, and a nearest succeeding P frame).

In an implementation, based on a picture feature, for each frame of image, a slice (slice)-based encoding manner may be used. For example, as shown in FIG. 3, according to the slice-based encoding manner, each frame of image is divided into four slices: a slice 1, a slice 2, a slice 3, and a slice 4. Slices of the I frame include complete slice picture information, and slices of the P frame include difference parts from slices corresponding to the preceding I frame or P frame. For example, a slice 1 of the P frame includes a difference part from a slice 1 of the preceding I frame. The slice-based encoding manner is not limited in embodiments of this application.

In an implementation, based on a picture feature, for each frame of image, a layered encoding manner with a base layer and an enhancement layer may alternatively be used. The enhancement layer depends on the base layer. For example, if the base layer includes a 480P video image, a 720P video image may be obtained by superimposing an enhancement layer 1, and a 1080P video image may be obtained by superimposing the enhancement layer 1 and an enhancement layer 2.

Due to a limitation of a maximum transmission unit (Maximum Transmission Unit, MTU) in a network, in an actual transmission process, image data of each frame, each slice, or each layer (base layer or enhancement layer) may need to be transmitted by using a plurality of protocol data units (Protocol Data Unit, PDU). The plurality of PDUs corresponding to the image data of each frame, each slice, or each layer may be referred to as a PDU set (PDU set). A receive end can successfully decode an image of a frame, a slice, or a layer of a frame only when all PDUs belonging to a same PDU set are received by the receive end or a quantity of PDUs that belong to a same PDU set and that are received by the receive end reaches a specific threshold. If not all the PDUs are received or the quantity of received PDUs does not reach the threshold, decoding may fail.

It can be learned that, when an access point performs scheduling or packet discarding on a plurality of PDUs in a PDU set, there is a dependency relationship between the plurality of PDUs. An access device (for example, a 3GPP access device or a non-3GPP access device) may determine frame integrity based on a received PDU. To be specific, when it is determined that one PDU or a plurality of PDUs in a PDU set are lost and a specific threshold (for example, x%) is exceeded, transmission of the PDU set is incomplete, and another received PDU is meaningless even if the PDU is transmitted to a destination. In this way, packet discarding may be performed or retransmission may be indicated.

For example, in an implementation, after identifying a PDU that belongs to a PDU set, a terminal device or a core network element such as a UPF network element encapsulates, for each PDU in the PDU set, a PDU set identifier, a PDU sequence number, and a quantity of PDUs included in the PDU set. After receiving the PDU, the access device (for example, the 3GPP access device or the non-3GPP access device) identifies, based on the PDU set ID, that the PDU belongs to the PDU set; counts a quantity of lost PDUs based on the PDU sequence number; and calculates a packet loss ratio based on the quantity of PDUs included in the PDU set. When the packet loss ratio exceeds the specific threshold, it is determined that transmission of the PDU set is incomplete.

In addition, different PDU sets have different importance. For example, importance of an I frame is different from that of a P frame, and the importance of the I frame is higher than that of the P frame. If a packet loss occurs in a PDU set corresponding to the I frame, a PDU set corresponding to the P frame or a B frame may also be discarded. For example, importance of a base layer is different from that of an enhancement layer, and the importance of the base layer is higher than that of the enhancement layer. If a packet loss occurs in a PDU set corresponding to the base layer, transmission for the enhancement layer is meaningless. Therefore, an access network device may perform differentiated QoS processing based on a dependency relationship between the different PDU sets during scheduling and packet discarding.

For example, in an implementation, after identifying a PDU set, a terminal device or a core network element such as a UPF network element encapsulates a PDU set identifier for each PDU in the PDU set; and includes, in the PDU, dependency information indicating dependency between the PDU set and another PDU set. After a depended PDU set is discarded, the access device (for example, the 3GPP access device or the non-3GPP access device) may discard, based on a sequence number and dependency information in a packet header, another PDU set that depends on the PDU set. For example, after an I frame is discarded, a succeeding P frame or B frame may also be discarded; or after a base layer is discarded, a succeeding enhancement layer may also be discarded.

Currently, a multi-access PDU session (MA PDU session) technology is provided. Multi-access means that there are a plurality of end-to-end transmission paths, and the plurality of transmission paths may be separately implemented by using one or more of a 3GPP access technology, a non-3GPP access technology, or another type of access technology. For example, data transmission may be implemented between the terminal device and the application server shown in FIG. 1 on at least a first path and a second path.

For example, if UE supports both a 3GPP (for example, NR or LTE) access manner and a non-3GPP (for example, Wi-Fi or Bluetooth) access manner, the UE may request to establish a multi-access PDU session when requesting to establish a PDU session. After the multi-access PDU session is successfully established, one QoS flow identifier (QoS Flow Identifier, QFI) corresponds to two or more paths. When receiving uplink or downlink data, the UE or a UPF may steer data traffic to two or more different paths by using a multi-access service steering technology.

For example, as shown in FIG. 1, if the UE supports both the 3GPP access manner and the non-3GPP access manner, after the multi-access PDU session is successfully established, one QFI may correspond to two paths between the terminal device and the application server. The UE may send uplink data on a 3GPP path (for example, the first path) and a non-3GPP path (for example, the second path). In addition, the UPF may also steer downlink data to the 3GPP path and the non-3GPP path. In a specific service steering technology, data steering may be performed based on a load sharing mode, an active/standby mode, a minimum delay mode, a priority mode, and the like.

However, in the foregoing service steering technology, data steering is performed based on each protocol data unit set or a quantity of bytes, and media layer information is not sensed. However, for XR data, if a data plane is enhanced based on an XR feature, and the UE or the UPF performs data steering according to the foregoing steering mode and based on the PDU or the quantity of bytes, it is very likely that different PDUs in a same PDU set are distributed to two or more different paths. If the PDUs are distributed to two different paths, a 3GPP access point or a non-3GPP access point cannot complete the foregoing frame integrity determining, to be specific, cannot determine whether one PDU or a plurality of PDUs in the PDU set are lost and whether the specific threshold is exceeded.

In addition, if frames in a same GOP are distributed to different paths, it is difficult to implement scheduling and packet discarding based on a dependency relationship between different frames. For example, in a GOP, an I frame is steered to a path 1, and a P frame is steered to a path 2. If a packet loss occurs in the I frame on the path 1, actually, there is no need to transmit the succeeding P frame, and the P frame may be discarded. However, an access device corresponding to the path 2 does not sense that the packet loss occurs in the I frame transmitted on the path 1, and still performs invalid data transmission. Similarly, because an enhancement layer depends on a base layer, when data flows of the base layer and the enhancement layer are steered to different paths, for example, the data flow of the base layer is steered to a path 1, and the data flow of the enhancement layer is steered to a path 2, if a base layer packet loss on the path 1 cannot be recovered, transmission for the enhancement layer on the path 2 is not necessary. Therefore, the access device may determine, based on a received data packet, whether a packet loss occurs, to avoid invalid transmission.

It can be learned that in the existing multi-access PDU session technology, for an XR service, if a plurality of PDUs of one PDU set, PDU sets belonging to a same GOP, or PDU sets belonging to different layers of a same frame are separately allocated to at least two access networks, the 3GPP access point or the non-3GPP access point cannot separately determine frame integrity or inter-frame dependency based on a received PDU. Consequently, the multi-access PDU session technology cannot be applied to the XR service, and transmission efficiency is low.

To resolve the foregoing problem, for a data feature of an XR service, embodiments of this application provide a data flow steering method applicable to a multi-access path communication mode. Service data is steered based on each group of protocol data unit sets, so that a plurality of access network devices corresponding to a plurality of access manners can determine frame integrity or a frame dependency relationship based on received service data, to implement data scheduling and packet discarding, and improve multi-access communication efficiency.

It may be understood that the communication system in FIG. 1 is merely an example, and does not constitute a limitation on a scenario to which the technical solutions provided in this application are applicable. A person skilled in the art should understand that, in a specific implementation process, the communication system may include fewer devices or network elements than those shown in FIG. 1, or the communication system may further include another device or another network element, and a quantity of devices or network elements in the communication system may also be determined based on a specific requirement.

Optionally, each network element in FIG. 1 in this embodiment of this application may be a functional module in a device. It may be understood that the foregoing function may be a network element in a hardware device, for example, a communication chip in a mobile phone; a software function running on dedicated hardware; or a virtualized function instantiated on a platform (for example, a cloud platform).

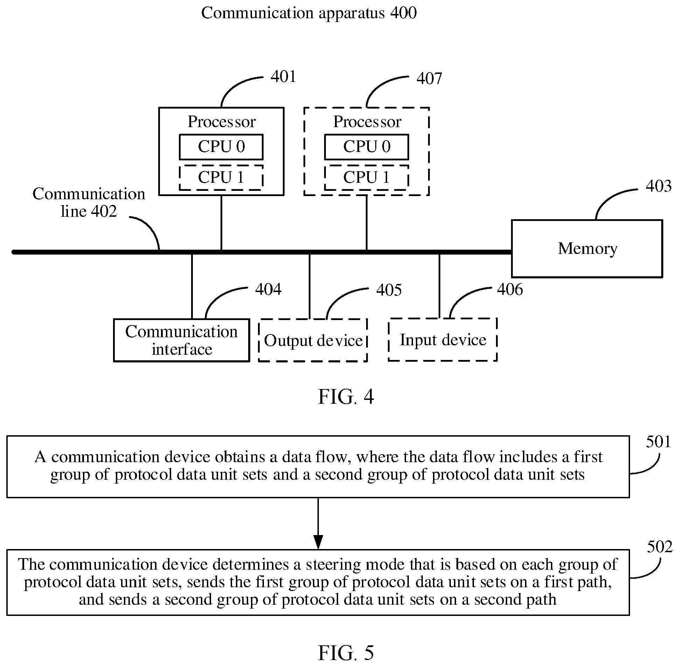

For example, each network element in FIG. 1 may be implemented by a communication apparatus 400 in FIG. 4. FIG. 4 is a diagram of a hardware structure of the communication apparatus to which an embodiment of this application is applicable. The communication apparatus 400 includes at least one processor 401, a communication line 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution in the solutions in this application.

The communication line 402 may include a path, for example, a bus, for transmitting information between the foregoing components.

The communication interface 404 uses any apparatus such as a transceiver, and is configured to communicate with another device or a communication network. The communication interface 404 is, for example, an Ethernet interface, a RAN interface, or a wireless local area network (wireless local area network, WLAN) interface.

The memory 403 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 403 is not limited thereto. The memory may exist independently, and is connected to the processor through the communication line 402. The memory may alternatively be integrated with the processor. The memory provided in embodiments of this application may be usually non-volatile. The memory 403 is configured to store computer-executable instructions for performing the solutions of this application, and the processor 401 controls execution. The processor 401 is configured to execute the computer-executable instructions stored in the memory 403, to implement the method provided in embodiments of this application.

Optionally, the computer-executable instructions in embodiments of this application may also be referred to as application program code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication apparatus 400 may include a plurality of processors, for example, the processor 401 and a processor 407 in FIG. 4. Each of these processors may be a single-core (single-CPU) processor or a multi-core (multi-CPU) processor. The processor herein may be one or more devices, circuits, and/or processing cores configured to process data (for example, computer program instructions).

During specific implementation, in an embodiment, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensing device.

The communication apparatus 400 may be a general-purpose device or a dedicated device. During specific implementation, the communication apparatus 400 may be a portable computer, a network server, a palmtop computer (personal digital assistant, PDA), a mobile phone, a tablet computer, a wireless terminal, an embedded device, or a device having a structure similar to that in FIG. 4. A type of the communication apparatus 400 is not limited in embodiments of this application.

With reference to the accompanying drawings, the following specifically describes a multi-path data flow steering method provided in embodiments of this application.

It should be noted that names of messages between network elements, names of parameters in the messages, or the like in the following embodiments of this application are merely examples, and may be other names during specific implementation. This is not specifically limited in embodiments of this application.

It may be understood that some or all of steps in embodiments of this application are merely examples. Other steps or variations of various steps may be further performed in embodiments of this application. In addition, the steps may be performed in a sequence different from a sequence presented in embodiments of this application, and not all the steps in embodiments of this application need to be performed.

As shown in FIG. 5, a communication device is used as an example for description, and the method may include the following steps 501 and 502. The communication device may be a terminal device, or the communication device may be a core network device, for example, a UPF network element.

501: The communication device obtains a data flow, where the data flow includes a first group of protocol data unit sets and a second group of protocol data unit sets.

The data flow is a data flow of a service used on the terminal. The data flow may be a data flow of uplink transmission, or may be a data flow of downlink transmission. For example, if the communication device is the terminal device, the data flow may be an uplink data flow that corresponds to the service and that is generated by the terminal device in response to an operation of a user in a process of using the service. A destination of the data flow may be an application server or the core network device. If the communication device is the UPF network element, the data flow may be a downlink data flow obtained from the application server or another network element device. A destination of the data flow may be the terminal device.

In an implementation, the first group of protocol data unit sets may be one protocol data unit set (PDU set), and the second group of protocol data units is one protocol data unit set. For example, the first group of protocol data unit sets and the second group of protocol data unit sets are respectively a first PDU set and a second PDU set.

Alternatively, in another implementation, if the data flow is a video image data flow, the first group of protocol data unit sets may be a group of pictures GOP including a plurality of protocol data unit sets, and the second group of protocol data unit sets is also a group of pictures GOP including a plurality of protocol data unit sets. There is a dependency relationship between a plurality of protocol data unit sets included in one GOP.

For example, the first group of protocol data unit sets and the second group of protocol data unit sets are respectively a first GOP and a second GOP. The first GOP includes a PDU set (1) corresponding to an I frame, a PDU set (2) corresponding to a P frame, and the like in the first GOP, and the second GOP includes a PDU set (i) corresponding to an I frame, a PDU set (j) corresponding to a P frame, and the like in the second GOP.

Alternatively, in another implementation, if the data flow is a video image data flow and according to a layered encoding manner, the first group of protocol data unit sets may be a plurality of protocol data unit sets including a base layer and an enhancement layer, and the second group of protocol data unit sets may also be a plurality of protocol data unit sets including a base layer and an enhancement layer. The enhancement layer depends on the base layer.

502: The communication device determines a steering mode that is based on each group of protocol data unit sets, sends the first group of protocol data unit sets on a first path, and sends a second group of protocol data unit sets on a second path.

One group of protocol data unit sets includes one PDU set, or may be a plurality of PDU sets.

In other words, that the communication device determines a steering mode that is based on each group of protocol data unit sets means that the communication device may determine to steer service data based on each PDU set, in other words, may steer PDUs included in different PDU sets to different paths; or the communication device may steer service data based on each plurality of PDU sets having a dependency relationship. For example, the communication device may steer the service data based on each GOP, in other words, steer PDUs included in different GOPs to different paths. Alternatively, the communication device may steer a plurality of PDUs of a base layer and an enhancement layer having a dependency relationship to a same path.

In an implementation, for example, as shown in FIG. 1, the first path may be a transmission path corresponding to a 3GPP access type, and the second path may be a transmission path corresponding to a non-3GPP access type. The communication device may steer at least one PDU corresponding to the first PDU set to the first path, and steer at least one PDU corresponding to the second PDU set to the second path. Alternatively, the communication device may steer all of a plurality of PDUs corresponding to the first GOP to the first path, and steer all of a plurality of PDUs corresponding to the second GOP to the second path. Alternatively, the communication device may steer all of a plurality of PDUs corresponding to different layers in a 1^{st} frame to the first path, and steer all of a plurality of PDUs corresponding to different layers in a 2^{nd} frame to the second path.

In an implementation, the first path may be a transmission path corresponding to a non-3GPP access type, and the second path may be a transmission path corresponding to a 3GPP access type.

In another implementation, the first path and the second path are different transmission paths corresponding to a 3GPP access type. For example, the first path is a transmission path in a 4G network, and the second path is a transmission path in a 5G network.

In another implementation, the first path and the second path are different transmission paths corresponding to a non-3GPP access type. For example, the first path is a transmission path in an untrusted non-3GPP network, and the second path is a transmission path in a trusted non-3GPP network.

Specifically, in this embodiment of this application, the steering mode that is based on each group of protocol data unit sets may specifically include steering modes, such as a load sharing mode, a minimum delay mode, and a priority mode, in which steering is performed based on each PDU set.

In another implementation, in this embodiment of this application, the steering mode that is based on each group of protocol data unit sets may specifically include steering modes, such as a load sharing mode, a minimum delay mode, and a priority mode, in which steering is performed based on each plurality of PDU sets having a dependency relationship, for example, based on each GOP.

The following describes specific manners of the several steering modes. Each steering mode may be applicable to a scenario in which steering is performed based on each PDU set, and may also be applicable to a scenario in which steering is performed based on each plurality of PDU sets having a dependency relationship. In this embodiment of this application, being based on one PDU set or being based on a plurality of PDU sets having a dependency relationship are collectively referred to as being based on a group of protocol data unit sets.

The load sharing mode means that different groups of protocol data unit sets (where each group includes one PDU set or a plurality of PDU sets) are steered to a plurality of paths based on preset load ratios and according to a load balancing rule. For example, steering is performed based on each GOP. If a load ratio configured for the first path is 30%, and a load ratio configured for the second path is 50%, the communication device may steer, to the first path, a plurality of PDUs included in first three arrived GOPs; steer, to the second path, a plurality of PDUs included in five subsequently arrived GOPs; and steer, to a third path, a PDU included in another subsequently arrived GOP until a quantity of GOPs shared on the third path reaches or exceeds a configured load ratio.

The minimum delay mode means that a data flow is preferentially steered to a path with a low transmission delay; and when it is detected that a transmission delay of another path is lower, the data flow may be subsequently steered to the path with the lower transmission delay based on each group of protocol data unit sets.

For example, steering is performed based on each PDU set. The communication device preferentially steers, to the first path with a low transmission delay, at least one PDU included in the first PDU set. When subsequently detecting that a transmission delay of the second path is lower than the transmission delay of the first path, the communication device may steer, to the second path, a PDU included in a PDU set other than the first PDU set.

The priority mode means that transmission is preferentially performed on an access path; and when congestion occurs on the path in the access mode, for example, a network indicator parameter of the access path is less than or exceeds a preset threshold, steering may be performed to another transmission path based on each group of protocol data unit sets. The network indicator parameter may include at least one of a transmission delay, a network bandwidth, a data transmission rate, or a packet loss rate.

For example, the communication device preferentially steers the first PDU set to the first path based on a configuration. When detecting that a transmission delay of the first path exceeds a threshold, the communication device may steer the second PDU set to the second path. Alternatively, when detecting that a data transmission rate of the first path is lower than a preconfigured data transmission rate threshold, the communication device may steer the subsequent second PDU set to the second path.

In the foregoing implementation, an existing load sharing mode, minimum delay mode, and priority mode are enhanced, to provide the load sharing mode, minimum delay mode, and priority mode that are based on each PDU set or each GOP (or each plurality of PDU sets having a dependency relationship) to implement service data steering, and therefore improve communication efficiency in a multi-access mode.

In an implementation, a network device may preconfigure or dynamically configure a multi-path data flow steering mode for the communication device. For example, the network device may send indication information to the communication device, to indicate the communication device to determine to perform multi-access service data steering based on each PDU set or each plurality of PDU sets (for example, each GOP).

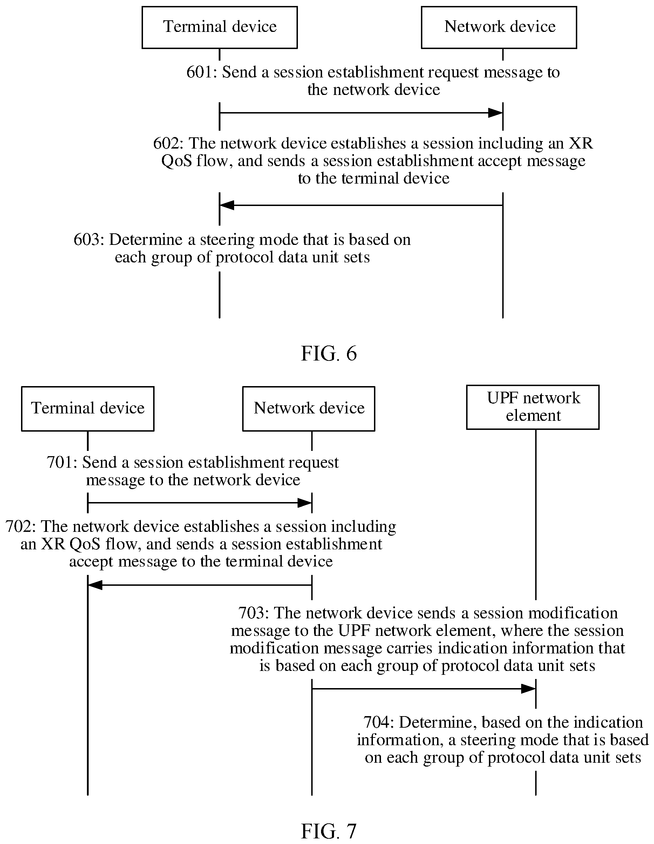

As shown in FIG. 6, for uplink data transmission, an example in which the communication device is the terminal device is used, and the method may include the following steps.

601: The terminal device sends a session establishment request message to the network device.

In an implementation, the terminal device may send session establishment request messages to the network device a plurality of times in sequence, to establish a plurality of PDU sessions associated with a plurality of paths. Alternatively, in an implementation, the terminal device may send a multi-access session establishment request message to the network device.

For example, the network device may be an SMF network element, and the terminal device sends an MA PDU session establishment request message to the SMF.

Correspondingly, the network device receives the MA PDU session establishment request message from the terminal device.

602: The network device establishes a session including an XR QoS flow, and sends a session establishment accept message to the terminal device.

In an implementation, the session establishment accept message sent by the network device to the terminal device may carry a QoS rule of the data flow, description information of the QoS flow, and access traffic steering, switching, and splitting (Access Traffic Steering, Switching, and Splitting, ATSSS) information. The ATSSS information may be used to select an access network for a data flow, transfer all traffic of one data flow from one access network to another access network, or split traffic of a single data flow into a plurality of access networks. The ATSSS information may include steering mode information, traffic description information, and the like. For different steering modes, other information corresponding to the steering modes may be further included. For example, if the steering mode information indicates a load sharing mode, the ATSSS information may further include indication information of an access type (for example, 3GPP or non-3GPP) and load sharing ratio information corresponding to different access types.

In an implementation, the network device may send, to the terminal device, steering indication information that is based on each group of protocol data unit sets. The indication information indicates a steering mode that is based on each group of protocol data unit sets (one PDU set or a plurality of PDU sets, for example, a GOP).

In an implementation, the indication information may be carried in the session establishment accept message. For example, the indication information is carried in the ATSSS information in the session establishment accept message. For example, an additional bit is added to extend the ATSSS information, to indicate the steering mode that is based on each group of protocol data unit sets (one PDU set or a plurality of PDU sets, for example, a GOP). Alternatively, a new mode type is added, to indicate a load sharing mode, a minimum delay mode, or a priority mode that is based on each group of protocol data unit sets (one PDU set or a plurality of PDU sets, for example, a GOP).

603: The terminal device determines the steering mode that is based on each group of protocol data unit sets.

The terminal device may determine, based on the indication information, the steering mode that is based on each group of protocol data unit sets (including one PDU set or a plurality of PDU sets, for example, a GOP); and then send a first group of protocol data unit sets on a first path, send a second group of protocol data unit sets on a second path, and so on.

In another implementation, for downlink data transmission, an example in which the communication device is the UPF is used. As shown in FIG. 7, the method may include the following steps.

701: The terminal device sends a session establishment request message to the network device.

For details, refer to related descriptions of step 601. Details are not described herein again.

702: The network device establishes a session including an XR QoS flow, and sends a session establishment accept message to the terminal device.

For details, refer to related descriptions of step 602. Details are not described herein again.

703: The network device sends a session modification message to the UPF network element, where the session modification message carries indication information that is based on each group of protocol data unit sets.

In an implementation, the session modification message may be specifically an N4 session modification request message.

The indication information may be carried in the session modification message, and indicates a steering mode that is based on each group of protocol data unit sets (one PDU set or a plurality of PDU sets, for example, a GOP).

It should be noted that, in this embodiment of this application, a sequence of performing steps 702 and 703 in which the network device sends messages to the terminal device and the UPF network element is not limited. The network device may first send the session establishment accept message to the terminal device, and then send the session modification message to the UPF network element. Alternatively, the network device may first send the session modification message to the UPF network element, and then send the session establishment accept message to the terminal device. Alternatively, the two steps may be simultaneously performed.

704: The UPF network element determines, based on the indication information, the steering mode that is based on each group of protocol data unit sets.

The UPF network element may determine, based on the indication information, the steering mode that is based on each group of protocol data unit sets (one PDU set or a plurality of PDU sets, for example, a GOP); and then send a first group of protocol data unit sets on a first path, send a second group of protocol data unit sets on a second path, and so on.

In an implementation, the network device sends the indication information to the communication device (the terminal device or the UPF network element), to indicate the load sharing steering mode that is based on each group of protocol data unit sets. The indication information may further include first information and second information, where the first information may identify a communication path, and the second information identifies a load ratio of the path corresponding to the first information. In other words, the load sharing mode may be jointly indicated by using the first information and the second information.

In this implementation, the communication device receives the first information and the second information from the network device. Therefore, the communication device may determine, based on the first information and the second information, the load sharing ratio of the path identified by the first information, and further determine a steering path of a data flow.

Optionally, the indication information may further include fourth information, and the fourth information indicates the load sharing mode that is based on each group of protocol data unit sets. In other words, the load sharing mode may be jointly indicated by using the first information, the second information, and the fourth information.

In another implementation, the network device sends the indication information to the communication device, to indicate the priority steering mode that is based on each group of protocol data unit sets. The indication information may further include third information, and the third information identifies a preferentially selected steering path (that is, an access path with a first priority). Optionally, the indication information may further include fifth information, and the fifth information indicates the priority mode that is based on each group of protocol data unit sets. Therefore, the communication device may determine, based on the third information (if there is the fifth information), to preferentially steer, based on each PDU set or GOP, a current data flow to the path indicated by the third information. For example, if the third information indicates a 3GPP access path, the terminal device or the UPF network element preferentially chooses to steer a data flow of an XR service to the 3GPP access path based on each PDU set or GOP.

Further, in this implementation, the indication information may further include sixth information, and the sixth information identifies a secondarily selected steering path (for example, an access path with a second priority). Therefore, the communication device may determine, based on the third information and the sixth information, to preferentially steer, based on each PDU set or GOP when the path indicated by the third information is congested, the current data flow to the path indicated by the sixth information. For example, if the third information indicates an access path of a non-3GPP Wi-Fi network, and the sixth information indicates an access path of a 3GPP 5G network, the terminal device or the UPF network element preferentially chooses to steer the data flow of the XR service to the Wi-Fi network based on each PDU set or GOP. If a network indicator parameter (for example, a data transmission rate) of the access path of the Wi-Fi network is lower than that of the access path of the 5G network, the terminal device or the UPF network element may choose to steer the data flow of the XR service to the access path of the 5G network based on each PDU set or GOP. Subsequently, if a network indicator parameter of the access path of the 5G network is lower than that of an access path of a 4G network or another access path, the terminal device or the UPF network element may choose to steer the data flow of the XR service to the access path of the 4G network or the another access path based on each PDU set or GOP.

In another implementation, the terminal device or the UPF network element may determine that the current data flow is transmitted by using an XR QoS flow (also referred to as an XR QoS flow in this application), to determine to perform multi-access data steering based on each group of protocol data unit sets (one PDU set or a plurality of PDU sets, for example, a GOP). In this manner, a multi-access data steering mode that is based on each group of protocol data unit sets (one PDU set or a plurality of PDU sets, for example, a GOP) does not need to be determined based on the indication information configured by the network device, and signaling overheads of the indication information can be reduced.

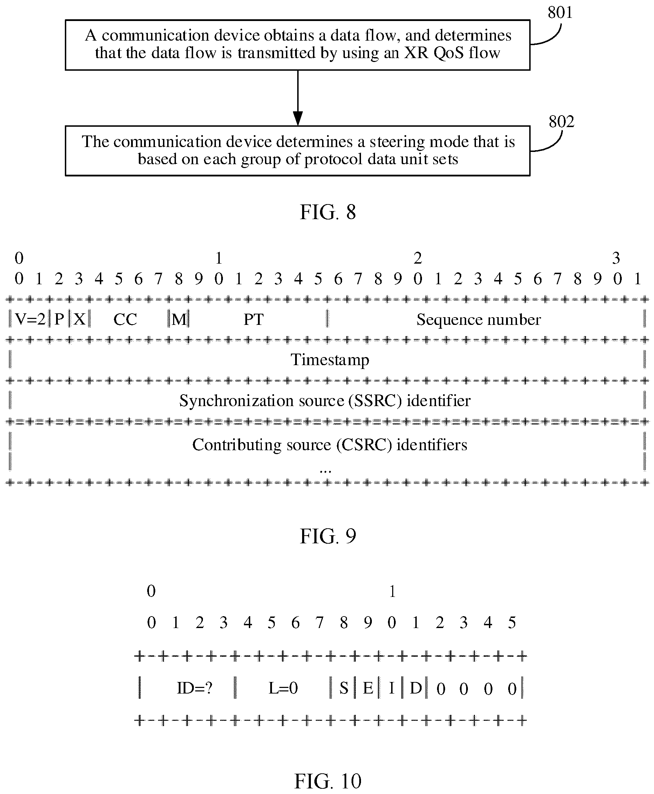

As shown in FIG. 8, the method may include the following steps.

801: The communication device obtains a data flow, and determines that the data flow is transmitted by using an XR QoS flow.

In an implementation, the communication device may determine, based on identification information (that is, a QFI) of a QoS flow hit by the data flow, that the data flow is transmitted by using an XR QoS flow. In other words, a network allocates a special QFI to the QoS flow, to indicate that the data flow is transmitted by using an XR QoS flow.

Alternatively, the communication device may determine, based on quality of service flow description (QoS flow description) information associated with a QoS flow hit by the data flow, that the data flow is transmitted by using an XR QoS flow. The quality of service flow description information includes at least one of a quality of service identifier, a transmission delay, or a packet loss rate. In other words, a network allocates, to the XR QoS flow, QoS flow description information including some specific parameters, to indicate that the data flow is transmitted by using an XR QoS flow.

Alternatively, the communication device may determine, based on a context, that the data flow is transmitted by using an XR QoS flow. Specifically, the communication device may determine, based on the context, that a currently established PDU session includes an XR QoS flow, and may identify, by using a related technology such as frame identification, that the current data flow is a data flow of an XR service. In this case, a QoS flow matching the XR flow is an XR QoS flow.

802: The communication device determines a steering mode that is based on each group of protocol data unit sets.

Specifically, the communication device may determine, based on the XR QoS flow, the steering mode that is based on each group of protocol data unit sets. Therefore, the steering mode that is based on each group of protocol data unit sets (one PDU set or a plurality of PDU sets, for example, a GOP) may be determined based on a preconfigured steering mode, or the preconfigured steering mode may be adjusted to the steering mode that is based on each group of protocol data unit sets. For example, currently, the network device configures a load sharing mode for the terminal device or the UPF network element. If the terminal device or the UPF network element determines that the current data flow is transmitted by using an XR QoS flow, the terminal device or the UPF network element may determine a load sharing steering mode that is based on each PDU set or GOP; and may further send a first group of protocol data unit sets on a first path, send a second group of protocol data unit sets on a second path, and so on.

In the foregoing embodiments, different implementation scenarios of several different multi-access service steering methods are described. Based on a data flow of an XR service, according to a steering mode that is provided in embodiments of this application and that is based on each PDU set or each plurality of PDU sets having a dependency relationship, for example, access devices corresponding to different access networks may determine, based on received PDU sets or GOPs, frame integrity or dependency relationships between different frames, to perform data scheduling and packet discarding, and improve communication efficiency of a multi-access manner.

It can be learned that in the foregoing embodiments, the communication device (for example, the terminal device or the UPF network element) needs to identify PDUs of a same PDU set, or identify a plurality of PDU sets having a dependency relationship, for example, a plurality of PDU sets corresponding to one GOP. In this way, the PDUs of the same PDU set or the plurality of PDU sets having the dependency relationship are steered to a same path, and different PDU sets or different GOPs may be steered to different paths according to the configured steering mode.

The following describes specific methods in which the communication device identifies a PDU set or a group of PDU sets having a dependency relationship.

In an implementation, according to the foregoing video image encoding manner, one PDU set may include data of one frame, data of one slice, or data of one layer in one frame.

In an implementation, if one PDU set includes data of one frame, one PDU set may be identified based on packet header information of a real-time transport protocol (Real-time Transport Protocol, RTP) packet, extension header information of the RTP packet, or a feature of data traffic.

The RTP packet is a protocol packet running at an application layer, is usually based on the user datagram protocol (User Datagram Protocol, UDP), and also supports the transmission control protocol (Transmission Control Protocol, TCP). The RTP packet includes a packet header (header) and a data payload (payload). The header includes real-time audio/video synchronization information, and the payload carries specific audio/video data.

For example, FIG. 9 shows a format of the RTP packet header.

A V field indicates an RTP protocol version. An X field indicates whether the RTP packet has an extension header. An M field marks some important events, for example, frame boundaries. A sequence number field indicates a sequence number. A timestamp field indicates a timestamp.

The following shows several possible PDU set identification manners.
1. Determining is performed based on timestamp information in the RTP packet header, where timestamp information is the same for a same PDU set.
   The timestamp information is, for example, the timestamp field shown in FIG. 9.
2. Determining is performed based on information in the M field in the RTP packet header, where the M field (corresponding to one bit) indicates a last PDU that belongs to a same PDU set.
3. Determining is performed based on an S field and an E field in the extension header of the RTP packet.

For example, FIG. 10 shows a format of a short extension header of the RTP packet.

The S field and the E field each correspond to one bit, and indicate a start and an end of each PDU set. Therefore, the communication device may determine, based on S fields and E fields, whether PDUs belong to a same PDU set.

4. Determining is performed based on a periodic feature of the data traffic. If it is detected that a data flow is periodic, according to a transmission rule of a media stream, a PDU included in each burst may be considered as a PDU set.

In an implementation, if one PDU set includes data of one slice, one PDU set may be identified based on a payload field of an RTP packet.

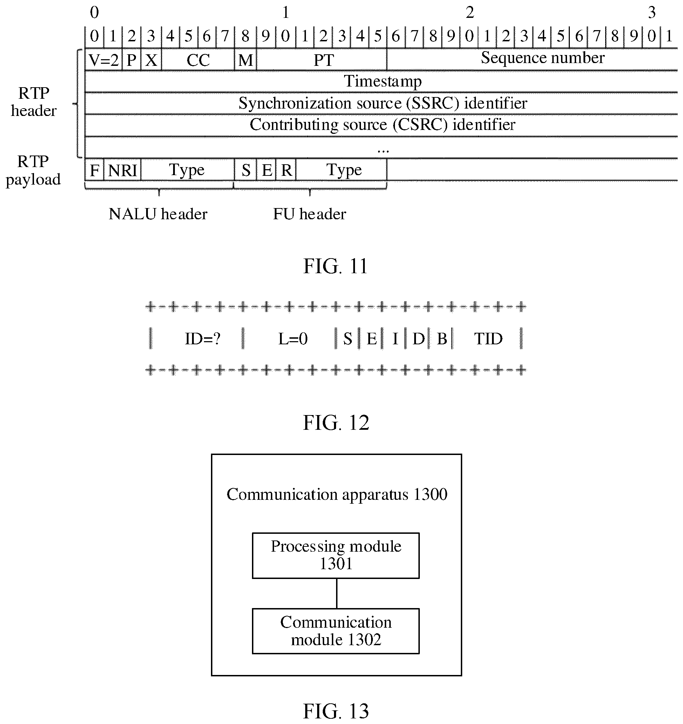

H.264 video image frame encoding is used as an example. FIG. 11 shows a format of a network abstract layer unit (Network Abstract Layer Unit, NALU) header in an H.264 video encoding manner. Determining may be performed based on a type (Type) field in the NALU packet header, and a method is as follows:
1. If Type is "single NAL unit packet", it indicates that the RTP packet includes one slice.
2. If Type is "aggregation packet", it indicates that the RTP packet includes a plurality of slices.
3. If Type is "fragmentation unit", it indicates that a plurality of RTP packets include one slice. An S bit and an E bit in an extension header of the RTP packet may identify a start and an end of one slice.

In another implementation, if one PDU set includes data of one layer in one frame, determining may be performed based on a long extension header of an RTP packet shown in FIG. 12.

For an S field, when S=1, it indicates that a current PDU is a 1^{st} PDU at a specific layer of a specific frame.

For an E field, when E=1, it indicates that the current PDU is a last PDU at a specific layer of a specific frame.

For an I field, when I=1, it indicates that a current frame is an independent frame and does not depend on a preceding frame.

For a B field, when B=1, it indicates that the current frame depends only on a base layer.

A TID field identifies a time layer.

TID=0 may identify the base layer, and another TID value may identify an enhancement layer.

Therefore, the communication device may perform determining based on the TID field included in the long extension header (as shown in FIG. 12) of the RTP packet and with reference to a timestamp field of a header (as shown in FIG. 9) of the RTP packet. For example, the communication device may identify, based on TID fields, whether PDUs belong to a same layer; and then identify, based on timestamp fields of RTP headers, whether data belongs to a same layer in a same frame.

It can be learned from the foregoing video image encoding manner that one GOP may include one I frame and several P frames or B frames, where the I frame is a 1^{st} frame of each GOP. The following shows several specific methods in which the communication device identifies a GOP.

### Manner 1: RTP packet

1. Determining is performed based on an I field in an extension header of the RTP packet.
   FIG. 10 shows a format of the extension header of the RTP packet. An I bit included in the extension header of the RTP packet indicates a frame that can be independently decoded, that is, indicates an I frame. Therefore, frames between the current I frame and a next I frame belong to one GOP.
2. Determining is performed based on an I field in an extension header of the RTP packet and timestamp information in an RTP packet header.

In an implementation, if RTP packets are out of order, different frames are generated at different moments, in other words, timestamp (timestamp) information is different. Therefore, the communication device may identify a GOP based on both I bits of RTP extension headers and timestamp (timestamp) information of RTP packet headers. To be specific, the communication device determines two I frames based on the I bits, and determines a time interval between a current I frame and a next I frame based on timestamp information carried in the I frames, where frames falling within the two timestamps belong to a current GOP.

Manner 4: If video encoding is performed in a manner with a base layer and an enhancement layer, a plurality of PDU sets having a dependency relationship need to be identified.

A scalable video coding (Scalable Video Coding, SVC) technology is a technology of dividing a video stream into a plurality of layers based on resolution, quality, and frame rate and separately encoding the layers. A video image is compressed by using a plurality of different data flows, and the data flows are used to process different components of the video image. For example, different components of the video image are separately encoded through a base layer and an enhancement layer. A video stream of the base layer may be used to process an image with a low definition by using a low bandwidth, and a video stream of the enhancement layer may be used to encode information based on a higher resolution, frame rate, and quality level. In this way, data flows of the base layer and the enhancement layer may be flexibly selected based on requirements of different applications for decoding, so that resource consumption can be adapted to a service feature.

For example, if an RTP packet header is shown in FIG. 9, the communication device may identify, based on a "timestamp" field in the RTP packet header, that a base layer and an enhancement layer that belong to a same moment may be considered as a group of PDU sets.

In an implementation, an inter-frame dependency relationship in embodiments of this application may mean that a receive end needs to depend on the first group of protocol data unit sets during decoding of the second group of protocol data unit sets. For example, if the first group of protocol data unit sets is an I frame, and the second group of protocol data unit sets is a P frame, the decoding of the second group of protocol data unit sets depends on the first group of protocol data unit sets. For example, if the second group of protocol data unit sets is an enhancement layer, and the first group of protocol data unit sets is a base layer, the decoding of the second group of protocol data unit sets depends on the first group of protocol data unit sets.

In addition, dependency in this application may also be dependency in service use or display. For example, the first group of protocol data unit sets corresponds to a video stream, and the second group of protocol data unit sets corresponds to an audio or a haptic feedback. If video transmission fails, audio or haptic experience is incomplete. Therefore, it is considered that the second group of protocol data unit sets depends on the first group of protocol data unit sets. For the dependency in service use or display, a group of a protocol data unit set corresponding to any data flow may be the first group of protocol data unit sets, and a group of protocol data unit sets corresponding to another data flow may be the second group of protocol data unit sets. When any data flow is not successfully transmitted, transmission of another data flow is also accompanied by incomplete experience. Therefore, it may be considered that groups of protocol data unit sets corresponding to data flows that use a same service depend on each other. The service in this application may be a media service (for example, a video or an audio), a sensing service (for example, a haptic feedback), or the like.

Therefore, for example, if the first group of protocol data unit sets is an I frame in a video stream, and the second group of protocol data unit sets is a P frame that belongs to a same GOP as the I frame, the communication device may determine that the first group of protocol data unit sets and the second group of protocol data unit sets have a dependency relationship, and may steer the first group of protocol data unit sets and the second group of protocol data unit sets to a same path.

Alternatively, if the first group of protocol data unit sets is a P frame with an earlier time sequence in a video stream, the second group of protocol data unit sets is a P frame with a later time sequence in a same group as the P frame with the earlier time sequence. Alternatively, the first group of protocol data unit sets is a base layer in a video stream, and the second group of protocol data unit sets is an enhancement layer in the video stream. Alternatively, the first group of protocol data unit sets is one of a video, an audio, or a haptic feedback serving a same user, and the second group of protocol data unit sets is at least one other of the video, the audio, or the haptic feedback. For example, the first group of protocol data unit sets is the video, and the second group of protocol data unit sets is the audio and/or the haptic feedback. In this case, the communication device may determine that the first group of protocol data unit sets and the second group of protocol data unit sets have a dependency relationship, and may steer the first group of protocol data unit sets and the second group of protocol data unit sets to a same path.

In the foregoing implementations of this application, a plurality of different manners of identifying a group of protocol data unit sets are provided, so that the communication device can flexibly select and identify a group of protocol data unit sets (for example, a PDU set or a GOP), and perform XR service steering in a multi-path scenario based on groups of protocol data unit sets. Therefore, flexibility and communication efficiency of multi-path service steering can be improved.

Based on this, an embodiment of this application further provides a communication apparatus, configured to implement the steps performed by the terminal device, the UPF network element, or the like in the foregoing embodiments. As shown in FIG. 13, the communication apparatus 1300 may include a processing module 1301 and a communication module 1302.

The processing module 1301 is configured to obtain a data flow, where the data flow includes a first group of protocol data unit sets and a second group of protocol data unit sets.

The processing module 1301 is further configured to determine a steering mode that is based on each group of protocol data unit sets.

The communication module 1302 is configured to: send the first group of protocol data unit sets on a first path, and send the second group of protocol data unit sets on a second path.

In an implementation, the first group of protocol data unit sets is one protocol data unit set (PDU set), or includes a plurality of protocol data unit sets; and the second group of protocol data unit sets is one protocol data unit set, or includes a plurality of protocol data unit sets.

In an implementation, there is a dependency relationship between the plurality of protocol data unit sets.

In an implementation, the steering mode that is based on each group of protocol data unit sets includes: a load sharing mode, which means that different groups of protocol data unit sets are transmitted on a plurality of paths based on preset load ratios and according to a load balancing rule.

In an implementation, the steering mode that is based on each group of protocol data unit sets includes: a minimum delay mode, which means that a group of protocol data unit sets is transmitted on the first path with a low delay; and when it is detected that a transmission delay of the second path is lower than the transmission delay of the first path, transmission is performed on the second path based on each group of protocol data unit sets.

In an implementation, the steering mode that is based on each group of protocol data unit sets includes: a priority mode, which means that a group of protocol data unit sets is transmitted on the first path; and when the first path is congested, transmission is performed on the second path based on each group of protocol data unit sets.

In an implementation, the communication module 1302 is further configured to receive, from a network device, indication information that is based on each group of protocol data unit sets. The processing module is further configured to determine, based on the indication information, the steering mode that is based on each group of protocol data unit sets.

In an implementation, the communication module 1302 is further configured to receive first information and second information from the network device, where the first information identifies a path, and the second information identifies a load ratio of the path corresponding to the first information. The processing module 1301 is configured to determine, based on the first information and the second information, the load sharing ratio of the path determined based on the first information.

In an implementation, the communication module 1302 is further configured to receive third information from the network device, where the third information identifies a path for preferential transmission. The processing module 1301 is configured to determine, based on the third message, that the first path is the path for preferential transmission.

In an implementation, the processing module 1301 is further configured to: determine that the data flow is transmitted by using an XR quality of service flow (QoS flow); and determine, based on the XR QoS flow, the steering mode that is based on each group of protocol data unit sets.

In an implementation, the processing module 1301 is further configured to: determine, based on identification information of a QoS flow hit by the data flow, that the data flow is transmitted by using an XR QoS flow; or determine, based on quality of service flow description (QoS flow description) information associated with a QoS flow hit by the data flow, that the data flow is transmitted by using an XR QoS flow, where the quality of service flow description information includes at least one of a quality of service identifier, a transmission delay, or a packet loss rate; or determine, based on a context, that the data flow is transmitted by using an XR QoS flow.

In an implementation, the first path and the second path are different transmission paths corresponding to a 3GPP access type or a non-3GPP access type.

In an implementation, the communication apparatus 1300 may be a terminal device or a user plane function UPF network element.

In an implementation, if the communication apparatus 1300 is the terminal device, the communication module 1302 is further configured to: send a session establishment request message to the network device; and receive a session establishment accept message from the network device.

Specifically, the communication apparatus 1300 may implement functions of the communication device (for example, the terminal device or the UPF network element) in the foregoing possible implementations. For details, refer to detailed descriptions in the foregoing method examples. Details are not described herein again.

**In** addition, an embodiment of this application further provides a communication apparatus, configured to implement the steps performed by the network device in the foregoing embodiments. As shown in FIG. 13, the communication apparatus 1300 may include a processing module 1301 and a communication module 1302.

The communication module 1302 is configured to receive a session establishment request message from a terminal device.

The processing module 1301 is configured to establish a session including an XR QoS flow.

The communication module 1302 is further configured to: send indication information to a communication device, where the indication information indicates a steering mode that is based on each group of protocol data unit sets; send a first group of protocol data unit sets on a first path; and send a second group of protocol data unit sets on a second path.

**In** an implementation, the first group of protocol data unit sets is one protocol data unit set, or is a plurality of protocol data unit sets; and the second group of protocol data unit sets is one protocol data unit set, or is a plurality of protocol data unit sets.

**In** an implementation, there is a dependency relationship between the plurality of protocol data unit sets.

**In** an implementation, the steering mode that is based on each group of protocol data unit sets includes: a load sharing mode, which means that different groups of protocol data unit sets are transmitted on a plurality of paths based on preset load ratios and according to a load balancing rule.

**In** an implementation, the steering mode that is based on each group of protocol data unit sets includes: a minimum delay mode, which means that a group of protocol data unit sets is transmitted on the first path with a low delay; and when it is detected that a transmission delay of the second path is lower than the transmission delay of the first path, transmission is performed on the second path based on each group of protocol data unit sets.

**In** an implementation, the steering mode that is based on each group of protocol data unit sets includes: a priority mode, which means that a group of protocol data unit sets is transmitted on the first path; and when the first path is congested, transmission is performed on the second path based on each group of protocol data unit sets.

In an implementation, the communication apparatus 1300 may be a session management function SMF network element.

In an implementation, the communication device may be the terminal device or a user plane function UPF network element.

In an implementation, if the communication device is the terminal device, the communication module 1302 is further configured to send a session accept message to the terminal device, where the indication information is included in the session accept message.

In an implementation, if the communication device is the user plane function UPF network element, the communication module 1302 is further configured to send a session modification message to the user plane function UPF network element, where the indication information is included in the session modification message.

In an implementation, the first path and the second path are different transmission paths corresponding to a 3GPP access type or a non-3GPP access type.

Specifically, the communication apparatus 1300 may implement functions of the network device in the foregoing possible implementations. For details, refer to detailed descriptions in the foregoing method examples. Details are not described herein again.

It may be understood that with reference to FIG. 4, when the communication apparatus is an electronic device, the communication module 1302 may be a transceiver, and may include an antenna, a radio frequency circuit, and the like, and the processing module 1301 may be a processor, for example, a baseband chip. When the communication apparatus is a component having a function of the communication device, the network device, or the like in the foregoing embodiments, the communication module 1302 may be a radio frequency unit, and the processing module 1301 may be a processor. When the apparatus is a chip system, the communication module 1302 may be an input interface and/or an output interface of the chip system, and the processing module 1301 may be a processor of the chip system, for example, a central processing unit (central processing unit, CPU).

It should be noted that, for a specific execution process and embodiment of the foregoing apparatus, refer to the steps performed by the communication device (including the terminal device or the UPF network element) or the network device in the foregoing method embodiments and related descriptions. For a technical problem resolved by the apparatus and technical effect brought by the apparatus, also refer to the content in the foregoing embodiments. Details are not described herein again.

In this embodiment, the apparatus is presented in a form of functional modules obtained through division in an integrated manner. The "module" herein may be a specific circuit, a processor for executing one or more software or firmware programs, a memory, an integrated logic circuit, and/or another component that can provide the foregoing function. In a simple embodiment, a person skilled in the art may figure out that the communicationapparatus may be in a form shown in FIG. 4.

For example, a function/implementation process of the processing module 1301 in FIG. 13 may be implemented by the processor 401 in FIG. 4 by invoking the computer program instructions stored in the memory 403. For example, a function/implementation process of the communication module 1302 in FIG. 13 may be implemented through the communication interface 404 in FIG. 4.

In some implementations, the processor 401 in FIG. 4 may invoke the computer-executable instructions stored in the memory 403, so that the apparatus 400 can perform the operations performed by the terminal device, the network device, or the UPF network element in the foregoing method embodiments, to implement the foregoing possible implementation methods of this application.

The communication apparatuses in the foregoing apparatus embodiments may completely correspond to the communication device or the network device in the method embodiments, and a corresponding module or unit performs a corresponding step. For example, when the apparatus is implemented in a form of a chip, the communication module 1302 may be an interface circuit that is of the chip and that is configured to receive a signal from another chip or apparatus. The communication module 1302 configured for sending or receiving is an interface circuit of the apparatus, and is configured to send a signal to or receive a signal from another apparatus. For example, when the apparatus is implemented in a form of a chip, the communication module 1302 may be an interface circuit configured to send a signal to another chip or apparatus.

In an example embodiment, a computer-readable storage medium including instructions or a computer program product is further provided. The instructions may be executed by the processor 401 of the communication apparatus 400 to complete the method in the foregoing embodiments. Therefore, for technical effect that can be achieved by the computer-readable storage medium or the computer program product, refer to the foregoing method embodiments. Details are not described herein again.

This application further provides a computer program product. The computer program product includes instructions. When the instructions are executed, a computer may perform an operation corresponding to the terminal device or the network device in the foregoing method.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a communication apparatus in which the chip is used is enabled to perform operations of the terminal device or the network device in the method provided in embodiments of this application.

Optionally, any communication apparatus provided in embodiments of this application may include the system chip.

Optionally, the computer instructions are stored in a storage unit.

An embodiment of this application further provides a communication system. The communication system may include any communication device and network device in the foregoing implementations. Alternatively, the communication system may include any terminal device and network device in the foregoing implementations. Alternatively, the communication system may include any terminal device, network device, and UPF network element in the foregoing implementations.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus.

A person skilled in the art may easily figure out another implementation solution of this application after considering this specification and practicing the present invention disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A multi-path data flow steering method, wherein the method comprises:
obtaining, by a communication device, a data flow of a service used on a terminal, wherein the data flow comprises a first group of protocol data unit sets and a second group of protocol data unit sets;
determining, by the communication device, a steering mode that is based on each group of protocol data unit sets;
sending the first group of protocol data unit sets on a first path; and
sending the second group of protocol data unit sets on a second path.

2. The method according to claim 1, wherein the first group of protocol data unit sets comprises one protocol data unit set, or comprises a plurality of protocol data unit sets; and
the second group of protocol data unit sets is one protocol data unit set, or is a plurality of protocol data unit sets.

3. The method according to claim 2, wherein there is a dependency relationship between the plurality of protocol data unit sets.

4. The method according to any one of claims 1 to 3, wherein the steering mode that is based on each group of protocol data unit sets comprises:
a load sharing mode, wherein the load sharing mode means that different groups of protocol data unit sets are transmitted on a plurality of paths based on preset load ratios and according to a load balancing rule.

5. The method according to any one of claims 1 to 3, wherein the steering mode that is based on each group of protocol data unit sets comprises:
a minimum delay mode, wherein the minimum delay mode means that a group of protocol data unit sets is transmitted on the first path with a low transmission delay; and when it is detected that a transmission delay of the second path is lower than the transmission delay of the first path, transmission is performed on the second path based on each group of protocol data unit sets.

6. The method according to any one of claims 1 to 3, wherein the steering mode that is based on each group of protocol data unit sets comprises:
a priority mode, wherein the priority mode means that a group of protocol data unit sets is transmitted on the first path; and when the first path is congested, transmission is performed on the second path based on each group of protocol data unit sets.

7. The method according to any one of claims 1 to 6, wherein the method further comprises:
receiving, by the communication device from a network device, indication information that is based on each group of protocol data unit sets; and
the determining, by the communication device, a steering mode that is based on each group of protocol data unit sets comprises: determining, based on the indication information, the steering mode that is based on each group of protocol data unit sets.

8. The method according to any one of claims 1 to 4 or claim 7, wherein determining, by the communication device based on the indication information, the load sharing mode that is based on each group of protocol data unit sets comprises:
receiving, by the communication device, first information and second information from the network device, wherein the first information identifies a path, and the second information identifies a load ratio of the path corresponding to the first information; and
determining, by the communication device based on the first information and the second information, the load sharing ratio of the path determined based on the first information.

9. The method according to any one of claims 1 to 3, claim 6, or claim 7, wherein the communication device determines, based on the indication information, the priority mode that is based on each group of protocol data unit sets, and the method further comprises:
receiving, by the communication device, third information from the network device, wherein the third information identifies a path for preferential transmission; and
determining, by the communication device based on the third information, that the first path is the path for preferential transmission.

10. The method according to any one of claims 1 to 9, wherein the method further comprises:
determining, by the communication device, that the data flow is transmitted by using an XR quality of service QoS flow; and
the determining, by the communication device, a steering mode that is based on each group of protocol data unit sets comprises: determining, based on the XR QoS flow, the steering mode that is based on each group of protocol data unit sets.

11. The method according to claim 10, wherein the determining that the data flow is transmitted by using an XR QoS flow comprises:
determining, by the communication device based on identification information of a QoS flow hit by the data flow, that the data flow is transmitted by using an XR QoS flow; or
determining, based on quality of service flow description information associated with a QoS flow hit by the data flow, that the data flow is transmitted by using an XR QoS flow, wherein the quality of service flow description information comprises at least one of a quality of service identifier, a transmission delay, or a packet loss rate; or
determining, based on a context, that the data flow is transmitted by using an XR QoS flow.

12. The method according to any one of claims 1 to 11, wherein the first path and the second path are different transmission paths corresponding to a 3GPP access type or a non-3GPP type.

13. The method according to any one of claims 1 to 12, wherein the communication device is a terminal device or a user plane function UPF network element.

14. The method according to any one of claims 1 to 13, wherein if the communication device is the terminal device, the method further comprises:
sending, by the terminal device, a session establishment request message to the network device; and
receiving, by the terminal device, a session establishment accept message from the network device.

15. A multi-path data flow steering method, wherein the method comprises:
receiving, by a network device, a session establishment request message from a terminal device;
establishing, by the network device, a session comprising an XR QoS flow; and
sending, by the network device, indication information to a communication device, wherein the indication information indicates, to the communication device, a steering mode that is based on each group of protocol data unit sets; sending a first group of protocol data unit sets on a first path; and sending a second group of protocol data unit sets on a second path.

16. The method according to claim 15, wherein the first group of protocol data unit sets is one protocol data unit set, or is a plurality of protocol data unit sets; and
the second group of protocol data unit sets is one protocol data unit set, or is a plurality of protocol data unit sets.

17. The method according to claim 16, wherein there is a dependency relationship between the plurality of protocol data unit sets.

18. The method according to any one of claims 15 to 17, wherein the steering mode that is based on each group of protocol data unit sets comprises:
a load sharing mode, wherein the load sharing mode means that different groups of protocol data unit sets are transmitted on a plurality of paths based on preset load ratios and according to a load balancing rule.

19. The method according to any one of claims 15 to 17, wherein the steering mode that is based on each group of protocol data unit sets comprises:
a minimum delay mode, wherein the minimum delay mode means that a group of protocol data unit sets is transmitted on the first path with a low delay; and when it is detected that a transmission delay of the second path is lower than the transmission delay of the first path, transmission is performed on the second path based on each group of protocol data unit sets.

20. The method according to any one of claims 15 to 17, wherein the steering mode that is based on each group of protocol data unit sets comprises:
a priority mode, wherein the priority mode means that a group of protocol data unit sets is preferentially transmitted on the first path; and when the first path is congested, transmission is performed on the second path based on each group of protocol data unit sets.

21. The method according to any one of claims 15 to 18, wherein that the indication information indicates the load sharing mode that is based on each group of protocol data unit sets further comprises:
the network device sends first information and second information to the communication device, wherein the first information identifies a path, the second information identifies a load ratio of the path corresponding to the first information, and the first information and the second information are used by the communication device to determine the load sharing ratio of the path identified by the first information.

22. The method according to any one of claims 15 to 17 or claim 20, wherein that the indication information indicates the priority mode that is based on each group of protocol data unit sets further comprises:
the network device sends third information to the communication device, wherein the third information identifies a path for preferential transmission, and the third information is used by the communication device to determine that the first path is the path for preferential transmission.

23. The method according to any one of claims 15 to 22, wherein the network device is a session management function SMF network element.

24. The method according to any one of claims 15 to 23, wherein the communication device is the terminal device or a user plane function UPF network element.

25. The method according to any one of claims 15 to 24, wherein if the communication device is the terminal device, the method further comprises:
sending, by the network device, a session accept message to the terminal device, wherein the indication information is comprised in the session accept message.

26. The method according to any one of claims 15 to 24, wherein if the communication device is the user plane function UPF network element, the method further comprises:
sending, by the network device, a session modification message to the user plane function UPF network element, wherein the indication information is comprised in the session modification message.

27. The method according to any one of claims 15 to 26, wherein the first path and the second path are different transmission paths corresponding to a 3GPP access type or a non-3GPP access type.

28. A multi-path data flow steering method, wherein the method comprises:
sending, by a terminal device, a session establishment request message to a network device;
establishing, by the network device, a session comprising an XR QoS flow;
sending, by the network device, indication information to a communication device, wherein the indication information indicates, to the communication device, a steering mode that is based on each group of protocol data unit sets; and
determining, by the communication device based on the indication information, the steering mode that is based on each group of protocol data unit sets, sending a first group of protocol data unit sets on a first path, and sending a second group of protocol data unit sets on a second path.

29. The method according to claim 28, wherein the first group of protocol data unit sets comprises one protocol data unit set, or comprises a plurality of protocol data unit sets; and
the second group of protocol data unit sets is one protocol data unit set, or is a plurality of protocol data unit sets.

30. The method according to claim 29, wherein there is a dependency relationship between the plurality of protocol data unit sets.

31. A communication apparatus, wherein the communication apparatus comprises:
a processing module, configured to obtain a data flow, wherein the data flow comprises a first group of protocol data unit sets and a second group of protocol data unit sets, wherein
the processing module is further configured to determine a steering mode that is based on each group of protocol data unit sets; and
a communication module, configured to: send the first group of protocol data unit sets on a first path, and send the second group of protocol data unit sets on a second path.

32. The apparatus according to claim 31, wherein the first group of protocol data unit sets is one protocol data unit set, or comprises a plurality of protocol data unit sets; and
the second group of protocol data unit sets is one protocol data unit set, or comprises a plurality of protocol data unit sets.

33. A network device, wherein the device comprises:
a communication module, configured to receive a session establishment request message from a terminal device; and
a processing module, configured to establish a session comprising an XR QoS flow, wherein
the communication module is further configured to: send indication information to a communication device, wherein the indication information indicates a steering mode that is based on each group of protocol data unit sets; send a first group of protocol data unit sets on a first path; and send a second group of protocol data unit sets on a second path.

34. The device according to claim 33, wherein the first group of protocol data unit sets is one protocol data unit set, or comprises a plurality of protocol data unit sets; and
the second group of protocol data unit sets is one protocol data unit set, or is a plurality of protocol data unit sets.

35. A communication device, wherein the communication device comprises a processor and a memory coupled to the processor; the memory stores computer program code; the computer program code comprises computer instructions; and when the processor executes the computer instructions, the terminal device is enabled to perform the method according to any one of claims 1 to 14.

36. A network device, wherein the network device comprises a processor and a memory coupled to the processor; the memory is coupled to the processor; the memory stores computer program code; the computer program code comprises computer instructions; and when the processor executes the computer instructions, the network device is enabled to perform the method according to any one of claims 15 to 27.

37. A computer-readable storage medium, wherein the computer-readable storage medium stores computer-executable instructions; and when the computer-executable instructions are invoked by a computer, the computer is enabled to perform the method according to any one of claims 1 to 14 or the method according to any one of claims 15 to 27.

38. A computer program product comprising instructions, wherein when the computer program product runs on a computer, the computer is enabled to perform the method according to any one of claims 1 to 14, or perform the method according to any one of claims 15 to 27.

39. A chip, wherein the chip is coupled to a memory, and is configured to read and execute program instructions stored in the memory, to implement the method according to any one of claims 1 to 14, or implement the method according to any one of claims 15 to 27.

40. A communication system, wherein the communication system comprises the communication apparatus according to claim 31 or 32 and the network device according to claim 33 or 34.
